# EUROPEAN PATENT SPECIFICATION

(11) **EP 4 034 424 B1**
(45) Date of publication and mention of the grant of the patent: **30.08.2023**
(21) Application number: 20867900.1
(22) Date of filing: 25.09.2020
(51) Int. Cl.: H04N 5/222

(54) **VIDEO RECORDING MIRROR**
VIDEOAUFZEICHNUNGSSPIEGEL
MIROIR D'ENREGISTREMENT VIDÉO

(30) Priority: 27.09.2019 US 201962907040 P
(43) Date of publication of application: 03.08.2022
(73) Proprietor: GENTEX CORPORATION, Zeeland, Michigan 49464 (US)
(72) Inventor: SLOTERBEEK, Eric S., Zeeland, Michigan 49464 (US); MINIKEY Jr., Danny L., Zeeland, Michigan 49464 (US); BOSMA, Bradley A., Zeeland, Michigan 49464 (US)
(74) Representative: Müller-Boré & Partner Patentanwälte PartG mbB
(86) International application number: PCT/US2020/052677
(87) International publication number: WO 2021/062125

(56) References cited:
- WO-A1-2018/195671
- GB-A- 2 434 690
- KR-A- 20120 077 689
- RU-U1- 150 950
- US-A1- 2010 238 289

## Description

### CROSS REFERENCE TO RELATED APPLICATIONS

This application claims the benefit of and priority to U.S. Provisional Patent Application No. 62/907,040, filed on September 27, 2019, entitled Video Recording Mirror.

### FIELD OF THE DISCLOSURE

This disclosure relates generally to video recording systems for vehicles, and in particular, to video recording systems to be integrated with rearview mirror assemblies in vehicles.

### BACKGROUND

Dashboard cameras are camera systems that may be adhered either to a dashboard or to a windshield of a vehicle. Dashboard cameras are designed to record events occurring in or around a vehicle. In particular, they are useful in the event of an accident, as they may provide indications of what may have transpired. They may also enable users to review and/or track the driving habits of drivers of the vehicle such as parents monitoring driving of a newly-licensed teen driver. As dashboard camera technology improves, dashboard cameras, or dash cams, are becoming more ubiquitous.

However, current dashboard cameras suffer from several shortcomings. For example, those that are adhered to a dashboard may have a relatively low point of view. This may mean that the dashboard camera does not capture some important details of the scene outside the vehicle. Some dashboard-mounted cameras may receive power from a cord that runs to the camera from a port in the vehicle which may be unsightly and inconvenient. In some cases, dashboard-mounted cameras may be able to be hardwired to the vehicle, but that may be costly.

Dashboard cameras adhered to a windshield may provide users with a higher point of view. However, power must be supplied to the dashboard camera, either via a power cord or from a battery. For dashboard cameras that receive power from a power cord, the power cord may extend from a port in the vehicle to the windshield-mounted camera, thereby causing an obstructed view and a potential distraction. Battery-powered dashboard cameras may stop working when the battery runs out, and thus may be less reliable. Some windshield-mounted dashboard cameras may be capable of being hard-wired into the vehicle, but that may be costly.

Additionally, there may be legal issues surrounding dashboard cameras. Some states prohibit mounting devices that may obstruct a driver's view on a vehicle windshield or dashboard, thereby effectively banning after-market windshield- and dashboard-mounted dashboard cameras in those states.

WO 2018/195671 A1 discloses a rear view mirror assembly for a vehicle comprising: a housing; a display element; a mirror element supported by the housing; and a processor disposed on a printed circuit board and at least partially enclosed within the housing; wherein the processor is configured to be in communication with and to receive inputs from at least one imager; wherein at least a portion of the display element is configured to selectively display images captured by the at least one imager; wherein the at least one imager is disposed in a vehicle; and wherein at least one imager is configured to capture images from the exterior of the vehicle.

### SUMMARY

According to an aspect of the disclosure, video recording system for a vehicle is defined in claim 1.

The first imager may be disposed in a vehicle, and the first imager may be configured to capture images of scenes to the front of the vehicle and to transmit data on the captured images to the processor. The first imager may be a wide-angle imager. The first imager may be disposed on one of a headliner of a vehicle and a windshield of a vehicle.

The video recording system further may comprise a second imager in communication with the processor. The second imager may be disposed in a vehicle and may be configured to capture images to the rear of the vehicle and to transmit data on the captured images to the processor. Upon a determination that there may be not sufficient memory to store new images, the system may be configured to store new images over older images. The rearview mirror assembly further may comprise a display element, and at least a portion of the display element may be configured to selectively display images captured by one of the first and the second imagers.

The video recording system may be configured to receive power from a vehicle power supply. The video recording system may be configured to be activated upon the vehicle ignition being turned on, and the video recording system may be configured to be turned off upon one of the vehicle ignition being turned off and power to the vehicle accessories being turned off. The video recording system further may comprise a back-up battery; the back-up battery may be capable of providing sufficient power to allow the video recording system to save any images captured after power to the video recording system may be turned off.

The user interface may be capable of, upon receipt of a user input, saving images captured within a predetermined time interval prior to the receipt of the user input. The rearview mirror assembly of the video recording system may comprise a display element, and at least a portion of the display element may be configured to selectively display images captured by the first imager. The video recording system further may comprise at least one indicator disposed so as to be selectively visible through the mirror element. The indicator may be configured to indicate a status of the video recording system. The video recording system may be capable of transmitting captured images wirelessly to another device.

The video recording system further may comprise a microphone in communication with the processor, and the microphone may be configured to capture audio.

The video recording system may be in communication with accident detection system(s) of vehicle; and the video recording system may be configured to automatically, upon receipt of an input from the accident detection system(s) that an accident may have been detected, save images captured for a predetermined amount of time prior to the receipt of the input. The video recording system further may comprise an accident-detection sensor configured to be in communication with the processor. The video recording system may be configured to automatically, upon receipt of an input that an accident may have occurred, save images captured for a predetermined amount of time prior to the receipt of the input.

The video recording system further may comprise a heat sink disposed within the rearview mirror assembly and a thermally conductive spacer disposed between the heat sink and the processor and configured to transfer heat from the processor to the heat sink.

According to another aspect of the disclosure, a rearview mirror assembly for a vehicle may comprise a housing; a mirror element supported by the housing; and a processor disposed on a printed circuit board, the printed circuit board at least partially enclosed within the housing. The processor may be configured to be in communication with and to receive inputs from at least one imager. The at least one imager may be disposed in a vehicle. At least one imager may be configured to capture images from the exterior of the vehicle.

The captured images may comprise video images. At least one imager may be configured to capture images of scenes to the front of the vehicle and to transmit image data from the captured images to the processor. The at least one imager may be disposed on one of a headliner of a vehicle and a windshield of a vehicle.

The processor may be configured to be in communication and may be configured to receive inputs from at least two imagers. A first imager may be disposed in the vehicle and may be configured to capture images of scenes to the front of the vehicle. A second imager may be disposed in the vehicle. The second imager may be configured to capture images to the rear of the vehicle. The first and the second imagers may be configured to transmit data on the captured images to the processor. Upon a determination that there may not insufficient memory to allow newly-captured images to be stored, the system may be configured to store the new images over older images and to erase the older images.

The processor and the at least one imager may be configured to be activated upon the vehicle ignition being turned on, and the processor and the at least one imager may be configured to be turned off upon one of the vehicle ignition being turned off and power to the vehicle accessories being turned off. The processor may be capable of transmitting captured images wirelessly to another device.

The rearview mirror assembly may be configured to receive power from a vehicle power supply. The rearview mirror assembly further may comprise a back-up battery. The back-up battery may be capable of providing sufficient power to allow the processor to cause any captured images not saved before the power to the video recording system is turned off to be saved.

The rearview mirror assembly further may comprise a user interface capable of, upon receipt of a user input, causing the saving of images captured within a predetermined time interval prior to the receipt of the user input. The rearview mirror assembly further may comprise a display element, and at least a portion of the display element may be configured to selectively display images captured by the at least one imager. The rearview mirror assembly further may comprise at least one indicator disposed so as to be selectively visible through the mirror element. The rearview mirror assembly further may comprise a microphone in communication with the processor, the microphone may be configured to capture audio.

The rearview mirror assembly may be in communication with accident detection systems of vehicle; and the video recording system may be configured to automatically, upon receipt of an indication that an accident may have been detected, save images captured for a predetermined amount of time prior to accident. The rearview mirror assembly further may comprise an accident-detection sensor configured to be in communication with the processor. The processor may be configured to automatically, upon receipt of an input from the accident-detection sensor that an accident may have occurred, save images captured for a predetermined amount of time prior to the receipt of the input.

The rearview mirror assembly further may comprise a heat sink disposed within the rearview mirror assembly and a thermally conductive spacer disposed between the heat sink and the processor and configured to transfer heat from the processor to the heat sink.

### BRIEF DESCRIPTION OF THE DRAWINGS

FIG. 1 illustrates a schematic diagram of a rearview mirror assembly of a video recording system in accordance with this disclosure;
FIG. 2 illustrates an exploded view of a video recording system within the rearview mirror assembly of FIG. 1;
FIG. 3 illustrates a bottom view of the rearview mirror assembly of FIG. 1;
FIG. 4 illustrates a side view of the rearview mirror assembly of FIG. 1;
FIB. 5A illustrates a front view of a first embodiment of the rearview mirror assembly of FIG. 1; and
FIB. 5B illustrates a front view of a second embodiment of the rearview mirror assembly of FIG. 1.

### DETAILED DESCRIPTION

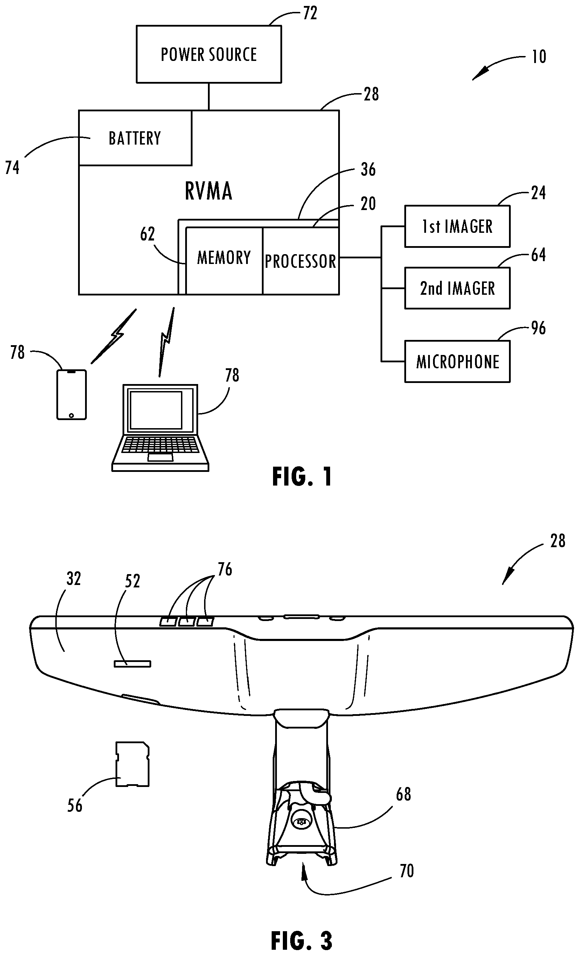

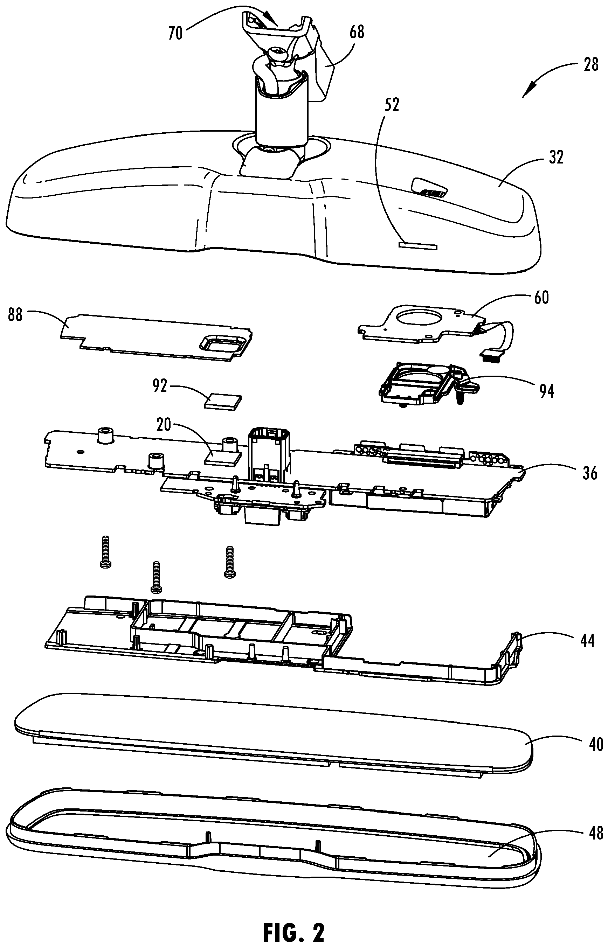

Referring to FIG. 1, a video recording system for a vehicle is shown generally at 10. Video recording system 10 comprises a processor 20, and at least a first camera or other imager 24 capable of being in communication with processor 20. Processor 20 is disposed in a rearview mirror assembly 28 of the vehicle. Rearview mirror assembly 28 further comprises a housing 32, as shown in FIG. 2. A printed circuit board (PCB) 36 is disposed within housing 32, and processor 20 is disposed on PCB 36.

In some embodiments, housing 32 supports a mirror element 40. Mirror element 40 may be configured to allow a driver of a vehicle to see objects or scenes behind the vehicle when rearview mirror assembly 28 is mounted on a windshield of a vehicle. In some embodiments, rearview mirror assembly 28 may further comprise an electro-optic element 48. Mirror element 40 may be disposed between electro-optic element 48 and a support plate 44. Support plate 44 may be disposed between mirror element 40 and PCB 36. In some embodiments, mirror element may comprise a display element such as a liquid crystal display.

First camera or imager 24 may be disposed within or secured to an interior or exterior surface of the vehicle. First imager 24 may be disposed in a location remote from rearview mirror assembly 28. In some embodiments, first imager 24 may be disposed at the top of the vehicle windshield, adjacent to or within a headliner of a vehicle ceiling, or on a ceiling console. In some embodiments, first imager 24 may be disposed within rearview mirror assembly 28. Housing 32 of rearview mirror assembly 28 may define an imager opening (not shown). First imager 24 may be configured to capture an image of a scene to the exterior of housing 32 through imager opening.

First imager 24 may be disposed so as to be capable of capturing images of an area in front of first imager 24. First imager 24 is capable of capturing video images. First imager 24 may have a wide-angle lens having a wide field of view. First imager 24 is in electrical communication with processor 20. Data from images captured by first imager 24 may be sent directly to processor 20 for processing.

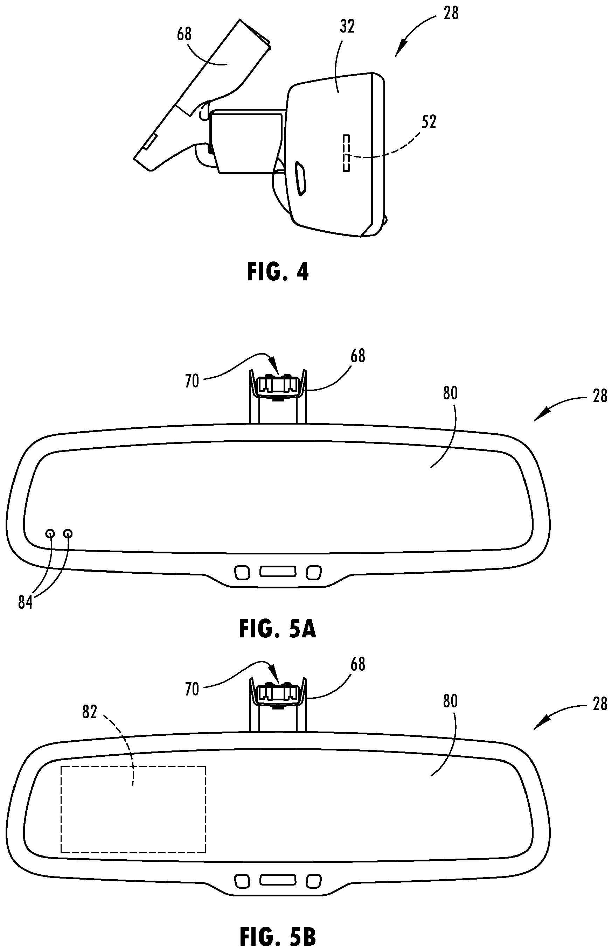

Referring now to FIGS. 3 and 4, housing 32 defines an opening 52 configured to allow a removable media storage card 56 to be inserted into rearview mirror assembly 28. When in place, media storage card 56 may be placed in selective communication with processor 20. Media storage card 56 may comprise non-volatile storage, and may comprise one of a secure digital card (SD card), a mini SD card, a microSD card, multimedia storage cards, and the like. When media storage card 56 is inserted into opening 52 of housing and is in communication with processor 20, data from images captured by first imager 24 may be capable of being stored on media storage card 56.

In some embodiments, processor 20 of rearview mirror assembly 28 additionally or alternatively comprises a memory 62. Memory 62 is disposed on PCB 36. Memory 62 may be random access memory, read only memory, flash memory, hard disk storage, flash memory storage, solid state drive memory, and the like. Memory 62 may be non-removable from rearview mirror assembly. Data from captured images may be stored in memory 62. The data may be accessible or downloadable by a wired or wireless connection between video recording system 10 and a remote device, such as a user's mobile telephone, a laptop, or a tablet computer. In some embodiments, the data may be accessed, viewed, and/or downloaded via a wireless connection such as Bluetooth^{®}, Wi-Fi, or radio frequency communication. In some embodiments, to access, view, or download the data from memory 62, a user may connect a wired connector to a dedicated port (not shown) defined in housing 32 of rearview mirror assembly 28. The dedicated port may be configured to accept the wired connection to enable a user to access, view, or download data from captured images. In some embodiments, images may be transmitted directly to a user's account, and the user may view the images contemporaneously. For example, a parent may be able to monitor a child's driving by viewing images from a remote device such as a mobile telephone, computer, or smart television as they are generated.

In some embodiments, PCB 36 may be configured to hold media storage card 56 when media storage card 56 is inserted into rearview mirror assembly 28. In some embodiments, a secondary PCB 60 may be configured to hold media storage card 56. Secondary PCB 60 may be configured to be in communication with PCB 36. In some embodiments, secondary PCB 60 may be directly connected to PCB 36. In some embodiments, secondary PCB 60 may be connected to PCB 36 via a cable, harness or other wiring (not shown). Data from images captured by first imager 24 may be transmitted from imager 24 to processor 20 for processing. After data from the images has been processed by processor 20, the data may be transmitted to media storage card 56 or memory 62 for storage.

Media storage card 56 may be capable of being removed from rearview mirror assembly 28 by a user, thereby allowing the user to view captured and stored images. Images may be viewed on a device that is compatible with media storage card 56 and is capable of displaying images. Data on images from media storage card 56 may be downloaded to and saved on remote devices such as mobile telephones, laptop computers, or tablet computers. Similarly, a user may view, transmit, and/or download images stored on memory 62. Images may be downloaded or transmitted to or viewed on rearview mirror assembly 28, or a remote device such as a mobile telephone, a computer, or a smart television.

Video recording system 10 may be configured to be activated upon the vehicle being turned on or the ignition of the vehicle being started. In some embodiments, once video recording system 10 has been activated, first imager 24 may begin capturing images. In some embodiments, first imager 24 may begin capturing images once a particular event has occurred. The particular event may be, for example, putting the vehicle into a forward gear or interacting with a user interface 76 of video recording system 10.

Power may be supplied to video recording system 10 by a power supply 72 associated with the vehicle. In some embodiments, vehicle recording system 10 may be configured to turn off after the vehicle ignition and/or power to the vehicle accessories is turned off. In some embodiments, video recording system 10 may continue to operate until the occurrence of a particular event or for a predetermined period of time after the vehicle ignition and/or power to vehicle accessories is turned off.

In some embodiments, rearview mirror assembly 28 may further comprise a battery 74. Battery 74 may be configured to provide power to video recording system 10 upon power from the vehicle 10 being turned off. Battery 74 may be capable of providing sufficient power to allow video recording system 10 to save any images captured and not stored prior to the receipt, by video recording system 10, of an indication to turn off.

In some embodiments, rearview mirror assembly 28 may comprise a capacitor, supercapacitor, solar cell, or other energy storage device (not shown) to provide power to the system, especially after the vehicle power supply has been disrupted or stopped. In some embodiments, other energy storage devices may be configured to provide the power necessary to save data related to images that have not yet been saved in the event that power to video recording system 10 is turned off prior to all recently-captured images being saved. The saved images may be saved in memory 62 or on media storage card 56. The saved images may additionally or alternatively be transmitted to cloud storage or may be displayed on rearview mirror assembly 28 or on an external device such as a smart phone or computer. Once stored, the saved images may be transmitted to an external device or displayed at a user's convenience.

Video recording system 10 may further comprise a user interface 76. User interface 76 may be disposed on rearview mirror assembly 28 or may be located remotely from rearview mirror assembly 28. For example, in some embodiments, user interface 76 may comprise a plurality of buttons mounted on housing 32 or elsewhere on rearview mirror assembly 28. In some embodiments, user interface additionally or alternatively may be accessed through a program accessible through a remote device 78 such as a user's mobile telephone, laptop computer, or tablet computer.

User interface 76 may be configured to allow users to save particular images or images captured during a particular time period. For example, user interface 76 may, upon receipt of an appropriate user input, cause recently-recorded images to be placed in a saved status in media storage card 56 or memory 62. The saved images may include images recorded over a certain time interval, such as images recorded in the two minutes just prior to the receipt of the user input.

In some embodiments, user interface 76 may allow a user, upon receipt of an appropriate user input, to display images. In some embodiments, rearview mirror assembly 28 comprises a display element 80. Display element 80 may be capable of selectively displaying digital images. In some embodiments, display element 80 may comprise a liquid crystal display. Upon receipt of an appropriate user input, captured images may be displayed on at least a portion 82 of display element 80 of rearview mirror assembly 28, as shown in FIG. 5B. In some embodiments, a menu for controlling video playback and the like may be selectively displayed on at least a portion of display element 80.

In some embodiments, video recording system 10 may be capable of transmitting captured images and audio to another device such as a user's mobile telephone, laptop, or tablet computer. The transmission of the captured images may be done wirelessly or via a wired connection. Video recording system 10 may utilize Bluetooth^{®}, Wi-Fi, radio frequency communication or combinations thereof. Upon receipt of a user input, images captured by video recording system 10 may be displayed on a user's mobile telephone or computer. The transmitted images may also be downloaded to and saved on a remote device such as a user's mobile telephone or computer.

In some embodiments, video recording system 10 may further comprise at least one indicator 84 as shown in FIG. 5A. The at least one indicator 84 may comprise, for example, a light source such as a light emitting diode (LED). The at least one indicator 84 may be capable of selectively illuminating and of being seen through mirror element 40 of rearview mirror assembly 28. The at least one indicator 84 may be configured to indicate to the user a status of video recording system 10, such as that video recording system 10 is actively recording or that a save request was successful.

In some embodiments, opening 52 in housing 32 is disposed on or toward one side of rearview mirror assembly 28, and processor 20 is disposed on the opposite side. For example, opening 52 may be disposed toward the right side of housing 32 and processor 20 may be disposed within housing 32 toward the left side of rearview mirror assembly 28. This arrangement, with the heat-generating processor 20 disposed at a distance from the location of media storage card 56, may reduce the amount of heat that media storage card 56 is exposed to. Similarly, memory 62 may be disposed on the opposite side of housing 32 from processor 20, thereby reducing the amount of heat that memory 62 is exposed to.

In some embodiments, a heat sink 88 may be disposed within housing 32 proximate to processor 20. A spacer 92 of thermally conductive material may connect processor 20 to heat sink 88. Spacer 92 may comprise silicon or other conductive material, and may be capable of conducting heat generated by processor 20 to heat sink 88 for dissipation.

In some embodiments, a PCB holder 94 may be disposed within housing 32 and be configured to hold secondary PCB 60. PCB holder 94 may be of a plastic or other low- or non-thermally-transmitting material. PCB holder 94 may act to provide a layer of insulation between media storage card 56 and PCB 36, thereby reducing the amount of heat that media storage card 56 is exposed to. In some embodiments, secondary PCB 60 may be disposed directly on PCB 36.

In some embodiments, video recording system 10 may further comprise a microphone or other audio input device 96. Microphone 96 may be in communication with processor 20 and with media storage card 56. Microphone 96 may be configured to capture audio from within the cabin of the vehicle or from the exterior of the vehicle. Microphone 96 may be configured to transmit the captured audio to media storage device 56 or memory 62 for storage. The captured audio may be linked with stored video.

In some embodiments, video recording system 10 may be in communication with the accident detection system(s) of the vehicle. The accident detection systems may include, for example, accelerometers or devices that determine whether airbags have been deployed. Upon receipt of an input indicating that an accident has occurred, video recording system 10 may be configured to cause processor 20 to save recently captured images. The saved images may be from a predetermined amount of time prior to the receipt of the indication of the accident, and may extend at least through the time at which video recording system 10 received the indication of the accident. This may give users an opportunity to access images of the events that preceded the accident.

In some embodiments, an accident-detection sensor (not shown) may be disposed within rearview mirror assembly 28. The accident-detection sensor may comprise, for example, an accelerometer. Video recording system 10 may be in communication with the accident-detection sensor. Upon receipt of an input from the accident-detection sensor that an accident may have occurred, video recording system 10 may be configured to cause processor 20 to save recently captured images covering a predetermined period of time, thereby providing users with images of events leading up to the incident that triggered the accident-detection sensor to indicate that an accident occurred.

In some embodiments, video recording system 10 may comprise at least a second camera or imager 64. Second imager 64 may be disposed within or secured to the vehicle. Second imager 64 may be disposed so as to have a field of view that enables it to capture images from the rear of the vehicle. Second imager 64 may have a wide-angle field of view. Second imager 64 may be in electrical communication with processor 20. Images captured by second imager 64 may be transmitted to processor 20 for processing, and data from images may then be transmitted to media storage card 56 or memory 62 for storage. More than two imagers may be used to capture images exterior to the vehicle and still remain within the scope of this disclosure. This may include imagers disposed to capture images to the side(s) of the vehicle, imagers to capture images at angles from the vehicle, and imagers to capture images above the vehicle.

Rearview mirror assembly 28 may be mounted to a windshield or ceiling of the vehicle by a mounting element 68. Mounting element 68 may define a channel 70 through which wires (not shown) may extend. The wires may connect at least one imager 24, 64 with processor 20, transmitting data from images captured by the at least one imager 24, 64 to processor 20.

Media storage card 56 may be configured to hold a certain amount of data. For example, media storage card 56 may be configured to hold data covering ninety minutes of images. If a determination is made that media storage card 56 does not have sufficient remaining storage to store additional images, data will be stored over existing images, thereby erasing the previously-stored images. In general, the erased images will be the oldest stored images. However, images that are in a saved status will not be erased until the occurrence of a predetermined event, such as the receipt of a particular user input or the passage of a predetermined amount of time.

The rearview mirror assembly 28 of this disclosure may include an electro-optic rearview assembly. Rearview mirror assembly 28 may alternatively include a prismatic mirror. Rearview mirror assembly 28 may additionally or alternatively include an electronic display that displays an image as sensed by a rearward facing camera or other imaging system (see, for example, commonly assigned U.S. Pat. No. 6,550,949 entitled "SYSTEMS AND COMPONENTS FOR ENHANCING REAR VISION FROM A VEHICLE," filed on Sep. 15, 1998, by Frederick T. Bauer et al.). Additionally or alternatively, rearview mirror assembly 28 may include both an electro-optic rearview assembly and a display device for providing an image from a rearward facing camera or other imaging system.

A method for capturing and storing images, including video images, exterior to a vehicle may include activating video recording system 10 upon the turning on of the vehicle. Once video recording system 10 has been activated, at least one imager 24, 64 may begin capturing images of scenes exterior to the vehicle. In some embodiments, at least one additional imager (not shown) may be configured to capture images of the interior of the vehicle. Data from the captured images may be transmitted to a processor 20 disposed within a rearview mirror assembly 28 of the vehicle. Processor 20 may be configured to process the data from the captured images.

Video recording system 10 further comprises a memory 56, 62. Memory 56, 62 may be permanent memory 62 or removable memory 56. Processor 20 may be configured to determine whether there is sufficient storage in memory 56, 62 to store the data from the newly-captured images. Upon a determination that there is insufficient data, processor 20 may direct the data from the newly-captured images be written over the data from the oldest images in memory 56, 62 that are not in a saved status. Processor 20 then transmits the data to memory 56, 62 for storage.

In some embodiments, images may be put into a saved status upon the receipt from the vehicle's accident-detection system of an indication that an accident may have occurred. In some embodiments, video recording system 10 may comprise an accident-detection sensor, and images may be put into a saved status upon the receipt from the video recording system's accident-detection sensor of an indication that an accident may have occurred. Upon receipt of an indication that an accident may have occurred, video recording system 10 may cause the saving of images captured for a predetermined interval prior to the receipt of the indication that an accident may have occurred by putting the images in a saved status.

In some embodiments, a user may indicate through user interface 76 that the user desires images be saved. For example, video recording system 10 may receive, through user interface 76, an input indicating that images should be saved. Upon receipt of the indication, processor 20 may place images captured within a predetermined period of time, such as the ninety seconds prior to the receipt of the input, into a saved status.

Images in a saved status may remain in the saved status until the receipt of a user input indicating that the particular saved images no longer need to be in a saved status and may be over-written with new images. This may be done by a user after viewing the image in the saved status. In some embodiments, images in a saved status may be removed from a saved status after the occurrence of a predetermined event. The predetermined event may include the passage of a predetermined period of time, such as one year.

In this document, relational terms, such as first and second, top and bottom, front and back, left and right, vertical, horizontal, and the like, are used solely to distinguish one entity or action from another entity or action, without necessarily requiring or implying any actual such relationship, order, or number of such entities or actions. These terms are not meant to limit the element which they describe, as the various elements may be oriented differently in various applications. Furthermore, it is to be understood that the device may assume various orientations and step sequences, except where expressly specified to the contrary. It is also to be understood that the specific devices and processes illustrated in the attached drawings and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

As used herein, the term "and/or," when used in a list of two or more items, means that any one of the listed items can be employed by itself, or any combination of two or more of the listed items can be employed. For example, if a composition is described as containing components A, B, and/or C, the composition can contain A alone; B alone; C alone; A and B in combination; A and C in combination; B and C in combination; or A, B, and C in combination.

## Claims

1. A rearview mirror assembly (28) for a vehicle comprising:
a housing (32);
a display element (80);
a mirror element (40) supported by the housing (32); and
a processor (20) disposed on a printed circuit board (36) and at least partially enclosed within the housing (32);
wherein the processor (20) is configured to be in communication with and to receive inputs from at least one imager (24, 64);
wherein at least a portion of the display element is configured to selectively display images captured by the at least one imager (24, 64);
wherein the at least one imager (24, 64) is disposed in a vehicle;
wherein at least one imager (24, 64) is configured to capture images from the exterior of the vehicle;
wherein the rearview mirror assembly (28) further comprises a memory (62) disposed on the printed circuit board (36) and configured to be in communication with the processor (20);
wherein the housing (32) defines an opening (52) at a distance from the processor (20);
wherein the opening (52) is configured to accept a removable media storage card capable of storing data from the captured images;
wherein the opening (52) defined by the housing (32) is disposed toward a first side of the housing (32);
wherein the processor (20) is disposed within the housing (32) toward a second side of the housing (32);
wherein the processor (20) is disposed on a first end of the printed circuit board (36); and
wherein the memory (62) is disposed on a second end of the circuit board in a spaced-apart relationship with the processor (20).

2. The rearview mirror assembly (28) of claim 1, wherein the processor (20) is configured to be in communication with and is configured to receive inputs from at least two imagers (24, 64);
wherein the captured images comprise video images; and
wherein at least one imager (24, 64) is configured to capture images to the front of the vehicle and to transmit image data from the captured images to the processor (20).

3. The rearview mirror assembly (28) of claim 2, wherein a first imager (24) is disposed in the vehicle and is configured to capture images of scenes to the front of the vehicle and a second imager (64) is configured to capture images to the rear of the vehicle; and
wherein the first and the second imagers (24, 64) are configured to transmit data on the captured images to the processor (20).

4. The rearview mirror assembly (28) of one of claims 1-3, wherein the rearview mirror assembly (28) is configured to receive power from a vehicle power supply (72); and
wherein the processor (20) and the at least one imager (24, 64) are configured to be activated upon the vehicle ignition being turned on, and wherein the processor (20) and the at least one imager (24, 64) are configured to be turned off upon one of the vehicle ignition being turned off and power to the vehicle accessories being turned off;
the rearview mirror assembly (28) further comprising a back-up battery (74);
wherein the back-up battery (74) is capable of providing sufficient power to allow the processor (20) to cause any images not saved before power to the video recording system (10) is turned off to be saved.

5. The rearview mirror assembly (28) of one of claims 1-4, further comprising a user interface (76) capable of, upon receipt of a user input, causing the saving of images captured within a predetermined time interval prior to the receipt of the user input.

6. A video recording system (10) for a vehicle, comprising:
the rearview mirror assembly (28) of claim 1; and
a first imager (24) in communication with the processor (20) and capable of capturing video images;
wherein the rearview mirror assembly (28) further comprises a user interface (76);
wherein the printed circuit board (36) is disposed within the rearview mirror assembly (28);
wherein the processor (20) is configured to process data from the captured images; and
wherein the user interface (76) is capable of allowing a user to selectively save video captured by the imager (24).

7. The video recording system (10) of claim 6, wherein the first imager (24) is disposed in a vehicle on one of a headliner of the vehicle and a windshield of the vehicle;
wherein the first imager (24) is configured to capture images of scenes to the front of the vehicle and to transmit data on the captured images to the processor (20); and
wherein the captured images comprise video images.

8. The video recording system (10) of claim 6 or 7, further comprising a second imager (64) in communication with the processor (20);
wherein the second imager (64) is disposed in a vehicle and is configured to capture images to the rear of the vehicle and to transmit data on the captured images to the processor (20).

9. The video recording system (10) of one of claims 6 to 8, wherein the video recording system (10) is configured to receive power from a vehicle power supply (72);
wherein the video recording system (10) is configured to be activated upon the vehicle ignition being turned on and
wherein the video recording system (10) is configured to be turned off upon one of the vehicle ignition being turned off and power to the vehicle accessories being turned off.

10. The video recording system (10) of one of claims 6 to 9, further comprising a back-up battery (74); wherein the back-up battery (74) is capable of providing sufficient power to allow the video recording system (10) to save any images captured after a power supply to the video recording system (10) is turned off.

11. The video recording system (10) of one of claims 6 to 10, wherein the user interface (76) is capable of, upon receipt of a user input, saving images captured within a predetermined time interval prior to the receipt of the user input.

12. The video recording system (10) of one of claims 6 to 11, wherein the rearview mirror assembly (28) comprises a display element (80), and wherein at least a portion of the display element (80) is configured to selectively display images captured by the first imager (24).

13. The video recording system (10) of one of claims 6 to 12, further comprising at least one indicator (84) disposed so as to be selectively visible through the mirror element (40);
wherein the indicator (84) is configured to indicate a status of the video recording system (10).

14. The video recording system (10) of one of claims 6 to 13, wherein the video recording system (10) is capable of transmitting captured images wirelessly to another device.

## Patentansprüche

1. Eine Rückspiegelanordnung (28) für ein Fahrzeug, die Folgendes umfasst:
ein Gehäuse (32);
ein Anzeigeelement (80);
ein Spiegelelement (40), das vom Gehäuse (32) getragen wird; und
einen Prozessor (20), der auf einer gedruckten Leiterplatte (36) angeordnet und zumindest teilweise im Gehäuse (32) eingeschlossen ist;
wobei der Prozessor (20) so konfiguriert ist, dass er mit mindestens einem Bildgeber (24, 64) in Verbindung steht und von diesem Eingaben empfängt;
wobei mindestens ein Teil des Anzeigeelements so konfiguriert ist, dass es selektiv Bilder anzeigt, die von dem mindestens einen Bildgeber (24, 64) erfasst wurden;
wobei der mindestens eine Bildgeber (24, 64) in einem Fahrzeug angeordnet ist;
wobei mindestens ein Bildgeber (24, 64) so konfiguriert ist, dass er Bilder von der Außenseite des Fahrzeugs erfasst;
wobei die Rückspiegelanordnung (28) ferner einen Speicher (62) umfasst, der auf der gedruckten Leiterplatte (36) angeordnet und so konfiguriert ist, dass er mit dem Prozessor (20) in Verbindung steht;
wobei das Gehäuse (32) in einem Abstand vom Prozessor (20) eine Öffnung (52) definiert;
wobei die Öffnung (52) so konfiguriert ist, dass sie eine herausnehmbare Medienspeicherkarte aufnehmen kann, die in der Lage ist, Daten von den erfassten Bildern zu speichern;
wobei die durch das Gehäuse (32) definierte Öffnung (52) in Richtung einer ersten Seite des Gehäuses (32) angeordnet ist;
wobei der Prozessor (20) innerhalb des Gehäuses (32) in Richtung einer zweiten Seite des Gehäuses (32) angeordnet ist;
wobei der Prozessor (20) an einem ersten Ende der gedruckten Leiterplatte (36) angeordnet ist; und
wobei der Speicher (62) an einem zweiten Ende der Leiterplatte in einer beabstandeten Beziehung zum Prozessor (20) angeordnet ist.

2. Die Rückspiegelanordnung (28) nach Anspruch 1, wobei der Prozessor (20) so konfiguriert ist, dass er mit mindestens zwei Bildgebern (24, 64) in Verbindung steht und so konfiguriert ist, dass er von diesen Eingaben empfängt;
wobei die erfassten Bilder Videobilder umfassen; und
wobei mindestens ein Bildgeber (24, 64) so konfiguriert ist, dass er Bilder zur Vorderseite des Fahrzeugs aufnimmt und Bilddaten von den aufgenommenen Bildern an den Prozessor (20) überträgt.

3. Die Rückspiegelanordnung (28) nach Anspruch 2, wobei ein erster Bildgeber (24) im Fahrzeug angeordnet und so konfiguriert ist, dass er Bilder von Szenen zur Vorderseite des Fahrzeugs erfasst, und ein zweiter Bildgeber (64) so konfiguriert ist, dass er Bilder zur Rückseite des Fahrzeugs erfasst; und
wobei der erste und der zweite Bildgeber (24, 64) so konfiguriert sind, dass sie Daten über die erfassten Bilder an den Prozessor (20) übertragen.

4. Die Rückspiegelanordnung (28) nach irgendeinem der Ansprüche von 1 bis 3, wobei die Rückspiegelanordnung (28) so konfiguriert ist, dass sie Strom von einer Fahrzeugstromversorgung (72) erhält; und
wobei der Prozessor (20) und der mindestens eine Bildgeber (24, 64) so konfiguriert sind, dass sie beim Einschalten der Fahrzeugzündung aktiviert werden, und wobei der Prozessor (20) und der mindestens eine Bildgeber (24, 64) so konfiguriert sind, dass sie ausgeschaltet werden beim Ausschalten eines von beiden, nämlich dem Ausschalten der Fahrzeugzündung und dem Ausschalten der Stromversorgung für das Fahrzeugzubehör;
wobei die Rückspiegelanordnung (28) ferner eine Backup-Batterie (74) umfasst; wobei die Backup-Batterie (74) in der Lage ist, ausreichend Strom zu liefern, damit der Prozessor (20) veranlassen kann, dass alle Bilder, die nicht gespeichert wurden, bevor die Stromversorgung des Videoaufzeichnungssystems (10) abgeschaltet wird, gespeichert werden.

5. Die Rückspiegelanordnung (28) nach irgendeinem der Ansprüche von 1 bis 4, die ferner eine Benutzerschnittstelle (76) umfasst, die bei Empfang einer Benutzereingabe in der Lage ist, die Speicherung von Bildern zu veranlassen, die innerhalb eines vorbestimmten Zeitintervalls vor dem Empfang der Benutzereingabe erfasst wurden.

6. Ein Videoaufzeichnungssystem (10) für ein Fahrzeug, das Folgendes umfasst:
die Rückspiegelanordnung (28) nach Anspruch 1; und
einen ersten Bildgeber (24), der mit dem Prozessor (20) in Verbindung steht und in der Lage ist, Videobilder zu erfassen;
wobei die Rückspiegelanordnung (28) ferner eine Benutzerschnittstelle (76) umfasst;
wobei die gedruckte Leiterplatte (36) innerhalb der Rückspiegelanordnung (28) angeordnet ist;
wobei der Prozessor (20) so konfiguriert ist, dass er Daten von den erfassten Bildern verarbeitet; und
wobei die Benutzerschnittstelle (76) in der Lage ist, es einem Benutzer zu ermöglichen, ein von dem Bildgeber (24) aufgenommenes Video selektiv zu speichern.

7. Das Videoaufzeichnungssystem (10) nach Anspruch 6, wobei der erste Bildgeber (24) in einem Fahrzeug auf einem von einem Dachhimmel (*headliner*) des Fahrzeugs und einer Windschutzscheibe des Fahrzeugs angeordnet ist;
wobei der erste Bildgeber (24) so konfiguriert ist, dass er Bilder von Szenen zur Vorderseite des Fahrzeugs erfasst und Daten über die erfassten Bilder an den Prozessor (20) überträgt; und
wobei die erfassten Bilder Videobilder umfassen.

8. Das Videoaufzeichnungssystem (10) nach Anspruch 6 oder 7, das ferner einen zweiten Bildgeber (64) umfasst, der mit dem Prozessor (20) kommuniziert;
wobei der zweite Bildgeber (64) in einem Fahrzeug angeordnet ist und so konfiguriert ist, dass er Bilder zur Rückseite des Fahrzeugs aufnimmt und Daten über die aufgenommenen Bilder an den Prozessor (20) überträgt.

9. Das Videoaufzeichnungssystem (10) nach irgendeinem der Ansprüche von 6 bis 8, wobei das Videoaufzeichnungssystem (10) so konfiguriert ist, dass es Strom von einer Fahrzeugstromversorgung (72) erhält;
wobei das Videoaufzeichnungssystem (10) so konfiguriert ist, dass es aktiviert wird, wenn die Fahrzeugzündung eingeschaltet wird, und
wobei das Videoaufzeichnungssystem (10) so konfiguriert ist, dass es ausgeschaltet wird, wenn entweder die Fahrzeugzündung ausgeschaltet wird oder die Stromversorgung des Fahrzeugzubehörs ausgeschaltet wird.

10. Das Videoaufzeichnungssystem (10) nach irgendeinem der Ansprüche von 6 bis 9, das ferner eine Backup-Batterie (74) umfasst; wobei die Backup-Batterie (74) in der Lage ist, ausreichend Energie zu liefern, um es dem Videoaufzeichnungssystem (10) zu ermöglichen, alle Bilder zu speichern, die aufgenommen wurden, nachdem die Energieversorgung des Videoaufzeichnungssystems (10) ausgeschaltet wurde.

11. Das Videoaufzeichnungssystem (10) nach irgendeinem der Ansprüche von 6 bis 10, wobei die Benutzerschnittstelle (76) bei Empfang einer Benutzereingabe in der Lage ist, Bilder zu speichern, die innerhalb eines vorbestimmten Zeitintervalls vor dem Empfang der Benutzereingabe aufgenommen wurden.

12. Das Videoaufzeichnungssystem (10) nach irgendeinem der Ansprüche von 6 bis 11, wobei die Rückspiegelanordnung (28) ein Anzeigeelement (80) umfasst, und wobei zumindest ein Teil des Anzeigeelements (80) so konfiguriert ist, dass es selektiv Bilder anzeigt, die vom ersten Bildgeber (24) aufgenommen wurden.

13. Das Videoaufzeichnungssystem (10) nach irgendeinem der Ansprüche von 6 bis 12, das ferner mindestens einen Indikator (84) umfasst, der so angeordnet ist, dass er selektiv durch das Spiegelelement (40) sichtbar ist;
wobei der Indikator (84) so konfiguriert ist, dass er einen Status des Videoaufzeichnungssystems (10) anzeigt.

14. Das Videoaufzeichnungssystem (10) nach irgendeinem der Ansprüche von 6 bis 13, wobei das Videoaufzeichnungssystem (10) in der Lage ist, aufgenommene Bilder drahtlos an eine andere Vorrichtung zu übertragen.

## Revendications

1. Un ensemble rétroviseur (28) pour un véhicule comprenant :
un boîtier (32) ;
un élément d'affichage (80)
un élément rétroviseur (40) soutenu par le boîtier (32) ; et
un processeur (20) disposé sur une carte de circuit imprimé (36) et au moins partiellement enfermé dans le boîtier (32) ;
sachant que le processeur (20) est configuré pour être en communication avec au moins un imageur (24, 64) et pour recevoir des entrées de la part de celui-ci ;
sachant qu'au moins une portion de l'élément d'affichage est configurée pour afficher sélectivement des images acquises par l'au moins un imageur (24, 64) ;
sachant que l'au moins un imageur (24, 64) est disposé dans un véhicule ;
sachant que l'au moins un imageur (24, 64) est configuré pour capturer des images de l'extérieur du véhicule ;
sachant que l'ensemble rétroviseur (28) comprend en outre une mémoire (62) disposée sur la carte de circuit imprimé (36) et configurée pour être en communication avec le processeur (20) ;
sachant que le boîtier (32) définit une ouverture (52) à une certaine distance du processeur (20) ;
sachant que l'ouverture (52) est configurée pour accepter une carte de stockage multimédia amovible en mesure de stocker les données des images acquises ;
sachant que l'ouverture (52) définie par le boîtier (32) est disposée vers un premier côté du boîtier (32) ;
sachant que le processeur (20) est disposé à l'intérieur du boîtier (32) vers un deuxième côté du boîtier (32) ;
sachant que le processeur (20) est disposé sur une première extrémité de la carte de circuit imprimé (36) ; et
sachant que la mémoire (62) est disposée sur une deuxième extrémité de la carte de circuit imprimé en relation espacée avec le processeur (20).

2. L'ensemble rétroviseur (28) d'après la revendication 1, sachant que le processeur (20) est configuré pour être en communication avec et est configuré pour recevoir des entrées en provenance d'au moins deux imageurs (24, 64) ;
sachant que les images acquises comprennent des images vidéo ; et
sachant qu'au moins un imageur (24, 64) est configuré pour capturer des images à l'avant du véhicule et pour transmettre des données d'image des images acquises au processeur (20).

3. L'ensemble rétroviseur (28) d'après la revendication 2, sachant qu'un premier imageur (24) est disposé dans le véhicule et est configuré pour capturer des images de scènes à l'avant du véhicule et qu'un deuxième imageur (64) est configuré pour capturer des images à l'arrière du véhicule ; et
sachant que les imageurs premier et deuxième (24, 64) sont configurés pour transmettre des données sur les images acquises au processeur (20).

4. L'ensemble rétroviseur (28) d'après l'une des revendications de 1 à 3, sachant que l'ensemble rétroviseur (28) est configuré pour recevoir de l'énergie de la part d'une alimentation électrique de véhicule (72) ; et
sachant que le processeur (20) et le au moins un imageur (24, 64) sont configurés pour être activés lorsque le contact du véhicule est mis, et sachant que le processeur (20) et le au moins un imageur (24, 64) sont configurés pour être désactivés lors de la coupure de l'un ou l'autre parmi le contact du véhicule et l'alimentation en énergie des accessoires du véhicule ;
l'ensemble rétroviseur (28) comprenant en outre une batterie de secours (*back-up battery*) (74) ;
sachant que la batterie de secours (74) est capable de fournir suffisamment d'énergie pour permettre au processeur (20) de provoquer la sauvegarde de toute image non sauvegardée avant que l'alimentation du système d'enregistrement vidéo (10) ne soit coupée.

5. L'ensemble rétroviseur (28) d'après l'une des revendications de 1 à 4, comprenant en outre une interface utilisateur (76) capable, à la réception d'une entrée utilisateur, de provoquer la sauvegarde d'images acquises dans un intervalle de temps prédéterminé avant la réception de l'entrée utilisateur.

6. Un système d'enregistrement vidéo (10) pour un véhicule, comprenant :
l'ensemble rétroviseur (28) d'après la revendication 1 ; et
un premier imageur (24) en communication avec le processeur (20) et capable de capturer des images vidéo ;
sachant que l'ensemble rétroviseur (28) comprend en outre une interface utilisateur (76) ;
sachant que la carte de circuit imprimé (36) est disposée à l'intérieur de l'ensemble rétroviseur (28) ;
sachant que le processeur (20) est configuré pour traiter des données des images acquises ; et
sachant que l'interface utilisateur (76) est en mesure de permettre à un utilisateur de sauvegarder sélectivement la vidéo capturée par l'imageur (24).

7. Le système d'enregistrement vidéo (10) d'après la revendication 6, sachant que le premier imageur (24) est disposé dans un véhicule sur l'un des éléments suivants : une garniture de toit (*headliner*) du véhicule et un pare-brise du véhicule ;
sachant que le premier imageur (24) est configuré pour capturer des images de scènes à l'avant du véhicule et pour transmettre des données sur les images acquises au processeur (20) ; et
sachant que les images acquises comprennent des images vidéo.

8. Le système d'enregistrement vidéo (10) d'après la revendication 6 ou 7, comprenant en outre un deuxième imageur (64) en communication avec le processeur (20) ;
sachant que le deuxième imageur (64) est disposé dans un véhicule et est configuré pour capturer des images à l'arrière du véhicule et pour transmettre des données sur les images acquises au processeur (20).

9. Le système d'enregistrement vidéo (10) d'après l'une des revendications de 6 à 8, sachant que le système d'enregistrement vidéo (10) est configuré pour recevoir de l'énergie de la part d'une alimentation électrique de véhicule (72) ;
sachant que le système d'enregistrement vidéo (10) est configuré pour être activé lorsque le contact du véhicule est mis, et sachant que le système d'enregistrement vidéo (10) est configuré pour être désactivé lors de la coupure de l'un ou l'autre parmi le contact du véhicule et l'alimentation en énergie des accessoires du véhicule.

10. Le système d'enregistrement vidéo (10) d'après l'une des revendications de 6 à 9, comprenant en outre une batterie de secours (74) ; sachant que la batterie de secours (74) est capable de fournir suffisamment d'énergie pour permettre au système d'enregistrement vidéo (10) de sauvegarder toutes les images acquises après que l'alimentation électrique du système d'enregistrement vidéo (10) a été coupée.

11. Le système d'enregistrement vidéo (10) d'après l'une des revendications de 6 à 10, sachant que l'interface utilisateur (76) est capable, à la réception d'une entrée utilisateur, de sauvegarder des images acquises dans un intervalle de temps prédéterminé avant la réception de l'entrée utilisateur.

12. Le système d'enregistrement vidéo (10) d'après l'une des revendications de 6 à 11, sachant que l'ensemble rétroviseur (28) comprend un élément d'affichage (80), et qu'au moins une portion de l'élément d'affichage (80) est configurée pour afficher sélectivement des images acquises par le premier imageur (24).

13. Le système d'enregistrement vidéo (10) d'après l'une des revendications de 6 à 12, comprenant en outre au moins un indicateur (84) agencé de manière à être sélectivement visible à travers l'élément miroir (40) ;
sachant que l'indicateur (84) est configuré pour indiquer un état du système d'enregistrement vidéo (10).

14. Le système d'enregistrement vidéo (10) d'après l'une des revendications de 6 à 13, sachant que le système d'enregistrement vidéo (10) est en mesure de transmettre sans fil les images acquises à un autre dispositif.
